# EUROPÄISCHE PATENTSCHRIFT

(11) **EP 2 136 086 B1**
(45) Veröffentlichungstag und Bekanntmachung des Hinweises auf die Patenterteilung: **13.07.2011**
(21) Anmeldenummer: 09006418.9
(22) Anmeldetag: 12.05.2009
(51) Int. Cl.: F16H 61/4017, F16H 61/4026, F16H 61/4035, E02F 9/22

(54) **Hydraulischer Antrieb**
Hydraulic drive
Entraînement hydraulique

(30) Priorität: 16.06.2008 DE 202008008045 U
(43) Veröffentlichungstag der Anmeldung: 23.12.2009
(73) Patentinhaber: Liebherr-Hydraulikbagger GmbH, 88457 Kirchdorf/Iller (DE)
(72) Erfinder: Meier, Simon, 87700 Memmingen (DE); Reisch, Thomas, 89281 Altenstadt-Filzingen (DE)
(74) Vertreter: Laufhütte, Dieter

(56) Entgegenhaltungen:
- EP-A- 1 609 636
- DE-A1-102006 040 459
- GB-A- 2 285 850

## Beschreibung

Die vorliegende Erfindung betrifft einen hydraulischen Antrieb mit einem Hydraulikmotor, welcher einen ersten und einen zweiten Hydraulikanschluss umfasst. Ein solcher Hydraulikmotor wandelt dabei hydraulische Energie in mechanische Energie um und wird dadurch angetrieben, dass zwischen dem ersten und dem zweiten Hydraulikanschluss des Hydraulikmotors eine Druckdifferenz angelegt wird, wodurch Hydraulikfluid durch den Hydraulikmotor hindurchfließt. Die von dem Hydraulikmotor erzeugte Drehbewegung wird dann von dem Schluckvolumen des Hydraulikmotors und der Menge der durch den Hydraulikmotor hindurchfließenden Hydraulikflüssigkeit bestimmt.

Bisher sind zum Betrieb von Hydraulikmotoren im wesentlichen die Ansteuerung in einem offenen Kreislauf und die Ansteuerung in einem geschlossenen Kreislauf bekannt. In einem offenen Kreislauf wird einer der beiden Hydraulikanschlüsse über ein Steuerventil mit Druck beaufschlagt, während der andere Anschluß auf Rücklaufdruck liegt. Für Richtungsänderungen ist ein Wegeventil vorgesehen, welches die Belegung der beiden Hydraulikanschlüsse umkehrt. In einem geschlossenen Hydraulikkreislauf sind die beiden Hydraulikanschlüsse des Hydraulikmotors dagegen direkt mit den Hydraulikanschlüssen einer Hydraulikpumpe verbunden, welche hierdurch den Volumenstrom durch den Hydraulikmotor direkt bestimmt.

Die Nachteile eines offenen Kreislaufs sind dabei die komplizierte Prioritätsschaltung, die vielen Ventile und Logiken, welche zur Ansteuerung benötigt werden, sowie das Fehlen einer genauen Momentensteuerung. Die Nachteile eines Systems mit geschlossenem Kreislauf sind insbesondere die hohen Kosten, da hier für jeden Hydraulikmotor eine eigene Hydraulikpumpe vorgesehen werden muss.

GB 2 285 850 A offenbart ein hydrostatisches Antriebssystem mit einer Pumpe und einem Verbraucher hydrostatischer Energie, die im offenen Kreislauf angeordnet sind, und mit einem im Zulauf des Verbrauchers angeordneten Steuerventil und einem im Ablauf des Verbrauchers angeordneten Bremsventil, wobei in der Bremsphase das Steuerventil und das Bremsventil getrennt voneinander betätigbar sind.

EP 1 609 636 A betrifft eine Hydraulische Steuervorrichtung mit einer hydraulischen Versorgungseinrichtung, die mindestens einen Pumpen- und einen Tankanschluß aufweist und mit fluidführenden Verbindungsleitungen zwischen dem jeweiligen Hydroantireb und den Anschlüssen, wobei in jede Verbindungsleitung ein Druckregelventil geschaltet ist.

DE 10 2006 040459 A1 offenbart einen Hydrauliksteuerkreis zur Steuerung eines Hydraulikmotors, gekennzeichnet durch in den beiden Arbeitsleitungen zwischen einer Hydraulikkonstantpumpe und einem Hydraulikmotor zur Steuerung des Drehwerkes angeordnete, getrennt ansteuerbare proportionale Pilotventile, sowie jeweils getrennt ansteuerbare proportionale Wegeventile mittels der die Zu- und Ablaufmenge zum und von Hydraulikmotor und damit dessen Drehrichtung steuerbar sind.

Aufgabe der vorliegenden Erfindung ist es nun, einen einfacheren, flexibleren und kostengünstigeren hydraulischen Antrieb zur Verfügung zu stellen, insbesondere einen hydraulischen Antrieb mit guter Momentensteuerung.

Diese Aufgabe wird von einem hydraulischen Antrieb gemäß Anspruch 1 gelöst. Dieser weist einen Hydraulikmotor mit einem ersten und einem zweiten Hydraulikanschluss auf. Erfindungsgemäß ist dabei vorgesehen, dass der am ersten Hydraulikanschluss des Hydraulikmotors anliegende Druck und der am zweiten Hydraulikanschluss des Hydraulikmotors anliegende Druck jeweils separat einstellbar sind. Hierdurch ergibt sich eine ebenso einfache wie effektive Momentensteuerung des hydraulischen Antriebs. Durch die separate Ansteuerung der an den beiden Hydraulikanschlüssen des Hydraulikmotors anliegenden Drücke kann damit die Druckdifferenz zum Antrieb des Hydraulikmotors frei und somit optimal für die jeweils gewünschte Beschleunigung bzw. das Abbremsen eingestellt werden. Zudem kann in Ruhestellung der Motor mit einem gewünschten Haltedruck eingespannt werden.

Vorteilhafterweise sind dabei ein erstes und ein zweites Druckminderventil vorgesehen, wobei der am ersten Hydraulikanschluss des Hydraulikmotors anliegende Druck über das erste Druckminderventil einstellbar ist und der am zweiten Hydraulikanschluss des Hydraulikmotors anliegende Druck über das zweite Druckminderventil einstellbar ist. Durch die Verwendung zweier Druckminderventile lässt sich die erfindungsgemäße Ansteuerung des Hydraulikmotors einfach und kostengünstig umsetzen.

Vorteilhafterweise sind dabei als Druckminderventile 3-Wegeventile vorgesehen. Insbesondere ist dabei vorteilhafterweise vorgesehen, dass das erste und das zweite Druckminderventil jeweils einen Anschluss für Arbeitsdruck, mit welchem sie mit einer Druckversorgung in Verbindung stehen, und einen Anschluss für Rücklaufdruck, mit welchem sie mit einer Rücklaufleitung in Verbindung stehen, aufweisen, wodurch der an dem jeweiligem Hydraulikanschluss des Hydraulikmotors anliegende Druck im Bereich zwischen dem Arbeitsdruck und dem Rücklaufdruck einstellbar ist. Über jedes der beiden Druckminderventile kann also entweder Hydraulikfluid von der Druckversorgung zum Hydraulikanschluss des Hydraulikmotors fließen, oder Hydraulikfluid vom Hydraulikanschluss des Hydraulikmotors zur Rücklaufleitung abfließen. Die Ansteuerung erfolgt dabei jeweils über die Druckminderventile. Die Anschlüsse für den Arbeitsdruck des ersten und des zweiten Druckminderventils stehen dabei vorteilhafterweise mit einer gemeinsamen Druckversorgung in Verbindung, die Anschlüsse für den Rücklaufdruck des ersten und des zweiten Druckminderventils mit einem gemeinsamen Rücklauf.

Weiterhin vorteilhafterweise ist eine erste Messblende vorgesehen, welche zwischen dem ersten Druckminderventil und dem ersten Hydraulikanschluss des Hydraulikmotors angeordnet ist, und/oder eine zweite Messblende, welche zwischen dem zweiten Druckminderventil und dem zweiten Hydraulikanschluss des Hydraulikmotors angeordnet ist, wobei der Druckabfall über die Messblende bestimmt und zur Ansteuerung des ersten und/oder zweiten Druckminderventils herangezogen wird. Über die Messblenden kann so der Druckabfall und somit die Menge des zum Motor hinfließenden oder vom Motor wegfließenden Hydraulikfluids gemessen werden und über die Druckminderventile begrenzt bzw. eingestellt werden.

Vorteilhafterweise sind die Druckminderventile dabei hydraulisch oder elektrisch ansteuerbar. Sind die Druckminderventile hydraulisch ansteuerbar, so weisen sie dementsprechend einen Steuereingang auf, an welchem ein Steuerdruck anlegbar ist.

Weiterhin vorteilhafterweise umfasst der erfindungsgemäße hydraulische Antrieb eine Hydraulikpumpe zur Bereitstellung des Arbeitsdrucks als Druckversorgung.

Vorteilhafterweise ist weiterhin ein Load-Sensing-Anschluss vorgesehen, welcher mit dem ersten und dem zweiten Hydraulikanschluss des Hydraulikmotors über Rückschlagventile in Verbindung steht. Über einen solchen Load-Sensing-Anschluss kann das System in ein Load-Sensing-System integriert werden und somit über eine Load-Sensing-Verstellpumpe betrieben werden.

Weiterhin vorteilhafterweise ist dabei ein Load-Sensing-Regler vorgesehen, dessen Steuereingang mit dem Load-Sensing-Anschluss in Verbindung steht, wobei der Load-Sensing-Regler eine Hydraulikpumpe regelt, welche als Druckversorgung den Arbeitsdruck bereitstellt.

Werden die Druckminderventile elektrisch angesteuert, so kann das erfindungsgemäße System auch mit einer elektrisch verstellbaren Pumpe betrieben werden.

Bei einer hydraulischen Ansteuerung der Druckminderventile ist dagegen vorteilhafterweise eine Vorsteuerung für die Druckminderventile vorgesehen, über welche vorteilhafterweise eine Sicherheitsabschaltung realisiert ist.

Die vorliegende Erfindung umfasst weiterhin ein Arbeitsgerät, insbesondere ein verfahrbares Arbeitsgerät, insbesondere einen Hydraulikbagger, mit einem hydraulischen Antrieb, wie er oben beschrieben wurde. Der hydraulische Antrieb kann dabei zum Antrieb unterschiedlicher Komponenten des Arbeitsgerätes eingesetzt werden und erlaubt eine ebenso einfache wie effektive Momentensteuerung.

Vorteilhafterweise umfasst das Arbeitsgerät dabei einen Unterwagen und einen auf dem Unterwagen um eine vertikale Drehachse drehbar angeordneten Oberwagen, wobei der Hydraulikmotor des erfindungsgemäßen hydraulischen Antriebs als Drehwerk für den Oberwagen dient.

Die vorliegende Erfindung wird nun anhand eines Ausführungsbeispiels sowie einer Zeichnung näher dargestellt. Dabei zeigt:

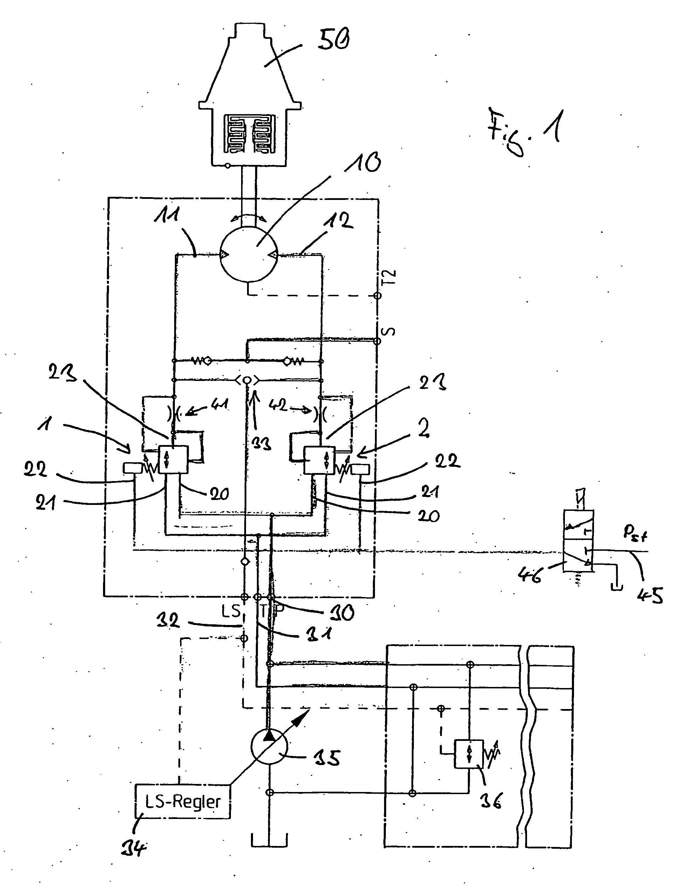

- Figur 1:: das Ausführungsbeispiel des erfindungsgemäßen hydraulischen Antriebs zum Antrieb eines Drehwerks eines Hydraulikbaggers.

Figur 1 zeigt ein Ausführungsbeispiel des erfindungsgemäßen hydraulischen Antriebs mit einem Hydraulikmotor 10, welcher einen ersten Hydraulikanschluss 11 und einen zweiten Hydraulikanschluss 12 umfasst. Bei dem Hydraulikmotor handelt es sich dabei um einen Konstantmotor mit zwei Drehrichtungen. Der Hydraulikmotor 10 wird dabei dadurch angetrieben, dass zwischen dem ersten und dem zweiten Hydraulikanschluss eine Druckdifferenz angelegt wird, wobei die Drehbewegung des Hydraulikmotors durch die durch den Hydraulikmotor fließende Menge an Hydraulikfluid und sein Schluckvolumen bestimmt wird.

Erfindungsgemäß können nun der am ersten Hydraulikanschluss 11 des Hydraulikmotors 10 anliegende Druck und der am zweiten Hydraulikanschluss 12 des Hydraulikmotors 10 anliegende Druck separat eingestellt werden. Hierfür ist ein erstes Druckminderventil 1 und ein zweites Druckminderventil 2 vorgesehen, wobei der Ausgang 23 des ersten Druckminderventils 1 mit dem ersten Hydraulikanschluss 11 und der Ausgang 23 des zweiten Druckminderventils 2 mit dem zweiten Hydraulikanschluss 12 des Hydraulikmotors in Verbindung steht. Hierdurch kann der am Hydraulikanschluss 11 anliegende Druck über das Druckminderventil 1 eingestellt werden und der am zweiten Hydraulikanschluss 12 anliegende Druck über das zweite Druckminderventil 2.

Der Hydraulikmotor 10 im Ausführungsbeispiel dient dabei zum Antrieb des Drehwerks 50 eines verfahrbaren Arbeitsgerätes, insbesondere eines Hydraulikbaggers. Über die Druckminderventile 1 und 2 kann so der Schwenkdruck frei und somit optimal für die Beschleunigung bzw. das Abbremsen eingestellt werden. In Ruhestellung kann der Hydraulikmotor 10 zudem mit einem gewünschten Haltedruck eingespannt werden.

Bei den Druckminderventilen 1 und 2 handelt es sich dabei um 3-Wegeventile, welche jeweils einen Anschluss 20 für den Arbeitsdruck, einen Anschluss 21 für den Rücklaufdruck sowie den mit dem jeweiligen Hydraulikanschluss des Hydraulikmotors verbundenen Ausgang aufweisen. Die Anschlüsse 20 für den Arbeitsdruck des ersten und des zweiten Druckminderventils stehen dabei mit einer gemeinsamen Druckversorgung in Verbindung, die Anschlüsse 21 für den Rücklaufdruck mit einem gemeinsamen Rücklauf. Hierfür ist ein gemeinsamer Druckversorgungsanschluss 30 sowie ein gemeinsamer Rücklaufanschluss 31 vorgesehen.

Weiterhin ist für das erste Druckminderventil eine Messblende 41 vorgesehen, welche zwischen dem Ausgang 23 des ersten Druckminderventils 1 und dem ersten Hydraulikanschluss 11 des Hydraulikmotors angeordnet ist, sowie für das zweite Druckminderventil eine zweite Messblende 42, welche zwischen dem Ausgang 23 des zweiten Druckminderventils 2 und dem zweiten Hydraulikanschluss 12 des Hydraulikmotors angeordnet ist. Über diese Messblenden 41 und 42 kann jeweils der Druckabfall und somit die Menge des zum Motor hinfließenden bzw. vom Motor abfließenden Hydraulikfluids gemessen und über die Druckminderventile 1 und 2 eingestellt werden.

Im Ausführungsbeispiel sind dabei die Druckminderventile hydraulisch angesteuert, wofür diese hydraulische Steueranschlüsse 22 aufweisen. Die hydraulischen Steueranschlüsse der beiden Druckminderventile 1 und 2 stehen dabei mit einer nur schematisch eingezeichneten Steuerleitung 45 für den Steuerdruck in Verbindung. Weiterhin ist eine Vorsteuerung in der Steuerleitung 45 vorgesehen, über welche die Druckminderventile 1 und 2 vorgesteuert werden. Dabei ist ein Sicherheitsventil 46 vorgesehen, welches eine Sicherheitsabschaltung für den Motor realisiert. Alternativ könnten die Druckminderventile 1 und 2 auch elektrisch angesteuert werden.

Die Einstellung des an den Hydraulikanschlüssen 11 und 12 des am Hydraulikmotor anliegenden Drucks wird durch die Druckminderventile 1 und 2 durchgeführt, indem entweder der Anschluss 20 für den Arbeitsdruck oder der Anschluss 21 für den Rücklaufdruck mit dem Ausgang 23 des Druckminderventils verbunden werden. Hierdurch kann entweder Hydraulikfluid von der Druckversorgung zum Hydraulikmotor hinfließen, oder Hydraulikfluid vom Hydraulikmotor zur Rücklaufleitung abfließen. Durch eine entsprechende Ansteuerung lässt sich so auch die durch den Hydraulikmotor fließende Menge an Hydraulikfluid steuern.

Weiterhin ist eine Load-Sensing-Anbindung vorgesehen, welche mit den beiden Hydraulikanschlüssen 11 und 12 des Hydraulikmotors 10 über Rückschlagventile 33 in Verbindung steht. Über den Load-Sensing-Anschluss 32 kann das System damit in ein Load-Sensing-System integriert werden und somit über eine Load-Sensing-Verstellpumpe 35 betrieben werden, wozu der Load-Sensing-Regler 34 vorgesehen ist, über welchen die Verstellpumpe 35 verstellt wird. Weiterhin ist ein Ventil 36 zur Einstellung des Arbeitsdrucks vorgesehen. Bei elektrisch angesteuerten Druckminderventilen 1 und 2 kann alternativ auch eine elektrisch verstellbare Pumpe verwendet werden.

Der erfindungsgemäße hydraulische Antrieb wird im Ausführungsbeispiel als Drehwerksantrieb eingesetzt. Über den Drehwerksantrieb kann damit ein auf einem Unterwagen drehbar angeordneter Oberwagen gedreht werden. Bei verfahrbaren Arbeitsgeräten sind dabei üblicherweise am Unterwagen das Fahrwerk und am Oberwagen das Arbeitsgerät, z. B. ein Ausleger, angeordnet. Bei einem Hydraulikbagger ist dementsprechend am Ausleger eine Schaufel angeordnet.

Der erfindungsgemäße hydraulische Antrieb erlaubt dabei eine ebenso einfache wie effektive Momentensteuerung, welche kostengünstig realisiert werden kann. Alternativ zum gezeigten Drehwerksantrieb lässt sich der erfindungsgemäße hydraulische Antrieb auch für andere Antriebsaufgaben einsetzen, für welche ein Antriebsmotor benötigt wird. Denkbar ist z. B. auch der Einsatz des erfindungsgemäßen hydraulischen Antriebs zum Antrieb einer Winde in Kranen.

## Patentansprüche

1. Hydraulischer Antrieb, welcher einen Hydraulikmotor (10) mit einem ersten und einem zweiten Hydraulikanschluß (11, 12) umfaßt, wobei der am ersten Hydraulikanschluß (11) des Hydraulikmotors (10) anliegende Druck und der am zweiten Hydraulikanschluß (12) des Hydraulikmotors (10) anliegende Druck jeweils separat einstellbar sind,
**dadurch gekennzeichnet,**
**dass** eine erste Meßblende (41) zwischen einem ersten Druckminderventil (1) und einem ersten Hydraulikanschluß (11) des Hydraulikmotors (10) angeordnet ist und/oder wobei eine zweite Meßblende (42) zwischen einem zweiten Druckminderventil (2) und einem zweiten Hydraulikanschluß (12) des Hydraulikmotors (10) angeordnet ist, und wobei der Druckabfall über die Meßblende (41, 42) bestimmt und zur Ansteuerung des ersten und/oder zweiten Druckminderventils (1, 2) herangezogen wird.

2. Hydraulischer Antrieb nach Anspruch 1, wobei das erste und das zweite Druckminderventil (1, 2) jeweils einen Anschluß (20) für Arbeitsdruck, mit welchem sie mit einer Druckversorgung in Verbindung stehen, und einen Anschluß (21) für Rücklaufdruck, mit welchem sie mit einer Rücklaufleitung in Verbindung stehen, aufweisen, wodurch der an dem jeweiligem Hydraulikanschluß (11, 12) des Hydraulikmotors (10) anliegende Druck im Bereich zwischen dem Arbeitsdruck und dem Rücklaufdruck einstellbar ist.

3. Hydraulischer Antrieb nach einem der vorangegangenen Ansprüche, wobei die Druckminderventile (1, 2) hydraulisch oder elektrisch ansteuerbar sind.

4. Hydraulischer Antrieb nach einem der vorangegangenen Ansprüche mit einer Hydraulikpumpe zur Bereitstellung des Arbeitsdrucks als Druckversorgung.

5. Hydraulischer Antrieb nach einem der vorangegangenen Ansprüche, wobei ein Load-Sensing-Anschluß (32) vorgesehen ist, welcher mit dem ersten und dem zweiten Hydraulikanschluß (11, 12) des Hydraulikmotors (10) über Rückschlagventile (33) in Verbindung steht.

6. Hydraulischer Antrieb nach Anspruch 5, mit einem Load-Sensing-Regler (34), dessen Steuereingang mit dem Load-Sensing-Anschluß (32) in Verbindung steht, wobei der Load-Sensing-Regler (34) eine Hydraulikpumpe regelt, welche als Druckversorgung den Arbeitsdruck bereitstellt.

7. Hydraulischer Antrieb nach einem der vorangegangenen Ansprüche, mit einer Vorsteuerung für die Druckminderventile (1, 2), über welche vorteilhafterweise eine Sicherheitsabschaltung realisiert ist.

8. Arbeitsgerät, insbesondere verfahrbares Arbeitsgerät, insbesondere Hydraulikbagger, mit einem hydraulischen Antrieb nach einem der vorangegangen Ansprüche.

9. Arbeitsgerät nach Anspruch 8, mit einem Unterwagen und einem auf dem Unterwagen um eine vertikale Drehachse drehbar angeordneten Oberwagen, wobei der Hydraulikmotor (10) als Drehwerk für den Oberwagen dient.

## Claims

1. A hydraulic drive which comprises a hydraulic motor (10) having a first hydraulic connector and a second hydraulic connector (11, 12), wherein the pressure applied at the first hydraulic connector (11) of the hydraulic motor (10) and the pressure applied at the second hydraulic connector (12) of the hydraulic motor (10) are each separately adjustable,
**characterized in that**
a first orifice flowmeter (41) is arranged between a first pressure reducing valve (1) and a first hydraulic connector (11) of the hydraulic motor (10), and/or a second orifice flowmeter (42) is arranged between a second pressure reducing valve (2) and a second hydraulic connector (12) of the hydraulic motor (10), and with the pressure drop being determined via the orifice flowmeter (41, 42) and being used for the control of the first and/or second pressure reducing valve (1, 2).

2. A hydraulic drive in accordance with claim 1, wherein the first and second pressure reducing valves (1, 2) each have a connector (20) for working pressure with which they are connected to a pressure supply and a connector (21) for return pressure with which they are connected to a return line, whereby the pressure applied at the respective hydraulic connector (11, 12) of the hydraulic motor (10) is adjustable in the range between the working pressure and the return pressure.

3. A hydraulic drive in accordance with one of the preceding claims, wherein the pressure reducing valves (1, 2) are hydraulically or electrically controllable.

4. A hydraulic drive in accordance with one of the preceding claims having a hydraulic pump, as the pressure supply, for the provision of the working pressure.

5. A hydraulic drive in accordance with one of the preceding claims, wherein a load-sensing connector (32) is provided which is connected via check valves (33) to the first and second hydraulic connectors (11, 12) of the hydraulic motor (10).

6. A hydraulic drive in accordance with claim 5, having a load-sensing regulator (34) whose control input is connected to the load-sensing connector (32), wherein the load-sensing regulator (34) regulates a hydraulic pump which, as a pressure supply, provides the working pressure.

7. A hydraulic drive in accordance with one of the preceding claims, having a pre-control for the pressure reducing valves (1, 2) via which a safety deactivation is advantageously realized.

8. A piece of working equipment, in particular a movable piece of working equipment, in particular a hydraulic excavator, having a hydraulic drive in accordance with one of the preceding claims.

9. A piece of working equipment in accordance with claim 8, having an undercarriage and a superstructure arranged rotatably around a vertical axis of rotation on the undercarriage, wherein the hydraulic motor (10) serves as slewing gear for the superstructure.

## Revendications

1. Entraînement hydraulique, qui comprend un moteur hydraulique (10) avec un premier et un deuxième raccord hydraulique (11, 12), où la pression s'appliquant au premier raccord hydraulique (11) du moteur hydraulique (10) et la pression s'appliquant au deuxième raccord hydraulique (12) du moteur hydraulique (10) sont réglables à chaque fois séparément,
**caractérisé en ce**
**qu'**un premier diaphragme de mesure (41) est disposé entre une première vanne de réduction de pression (1) et un premier raccord hydraulique (11) du moteur hydraulique (10) et/ou où un deuxième diaphragme de mesure (42) est disposé entre une deuxième vanne de réduction de pression (2) et un deuxième raccord hydraulique (12) du moteur hydraulique (10), et où la chute de pression est définie par le diaphragme de mesure (41, 42) et est utilisée pour la commande de la première et/ou deuxième vanne de réduction de pression (1, 2).

2. Entraînement hydraulique selon la revendication 1, dans lequel la première et la deuxième vanne de réduction de pression (1, 2) présentent respectivement un raccord (20) pour la pression de travail, avec lequel celles-ci sont en liaison avec une alimentation en pression, et un raccord (21) pour une pression de retour par lequel celles-ci sont en liaison avec une conduite de retour, moyennant quoi la pression s'appliquant au raccord hydraulique respectif (11, 12) du moteur hydraulique (10) est réglable dans la zone entre la pression de travail et la pression de retour.

3. Entraînement hydraulique selon l'une des revendications précédentes, dans lequel les vannes de réduction de pression (1, 2) peuvent être commandées hydrauliquement ou électriquement.

4. Entraînement hydraulique selon l'une des revendications précédentes avec une pompe hydraulique pour la mise à disposition de la pression de travail comme alimentation en pression.

5. Entraînement hydraulique selon l'une des revendications précédentes, dans lequel un raccord de détection de charge (32) est prévu qui est en liaison avec le premier et le deuxième raccord hydraulique (11, 12) du moteur hydraulique (10) par des clapets de non retour (33).

6. Entraînement hydraulique selon la revendication 5, avec un régulateur de détection de charge (34) dont l'entrée de commande est en liaison avec le raccord de détection de charge (32), où le régulateur de détection de charge (34) règle une pompe hydraulique qui met à disposition, comme alimentation en pression, la pression de travail.

7. Entraînement hydraulique selon l'une des revendications précédentes, avec une pré-commande pour les vannes de réduction de pression (1, 2) par laquelle est réalisée avantageusement une déconnection de sécurité.

8. Appareil de travail, en particulier appareil de travail déplaçable, en particulier pelle hydraulique, avec un entraînement hydraulique selon l'une des revendications précédentes.

9. Appareil de travail selon la revendication 8, avec un truck roulant et un châssis tournant disposé d'une manière tournante sur le truck roulant autour d'un axe de rotation vertical, où le moteur hydraulique (10) sert de mécanisme de rotation pour le châssis tournant.
